# EUROPÄISCHE PATENTSCHRIFT

(11) **EP 1 052 418 B1**
(45) Veröffentlichungstag und Bekanntmachung des Hinweises auf die Patenterteilung: **26.10.2005**
(21) Anmeldenummer: 00109885.4
(22) Anmeldetag: 10.05.2000
(51) Int. Cl.: F16C 11/06

(54) **Kugelgelenk**
Ball-joint
Articulation à rotule

(30) Priorität: 12.05.1999 DE 19921952
(43) Veröffentlichungstag der Anmeldung: 15.11.2000
(73) Patentinhaber: ZF Lemförder Metallwaren AG, 49448 Lemförde (DE)
(72) Erfinder: Sokolihs, Dirk, 49565 Bramsche (DE); Hülsmann, Markus, 49074 Osnabrück (DE); Kunze, Ralf, 49152 Bad Essen (DE)

(56) Entgegenhaltungen:
- EP-A- 0 280 018
- CH-A- 465 971
- DE-B- 1 266 074
- DE-C- 3 632 265
- GB-A- 1 154 168
- US-A- 3 389 927

## Beschreibung

Die Erfindung betrifft ein Kugelgelenk nach dem Oberbegriff des Patentanspruches 1.

Derartige Kugelgelenke werden beispielsweise für Radaufhängungen von Kraftfahrzeugen verwendet. Der prinzipielle Aufbau ist dabei weitgehend identisch.

Ein gattungsgemäßes Kugelgelenk geht aus der DE 36 32 265 C1 hervor. Um die relativ zueinander beweglichen Kugelgelenkbauteile gegenüber der Umgebung abzudichten, wird ein Dichtungsbalg zwischen dem Gehäuse und dem Kugelzapfen eingesetzt. Dieser ist zur Gelenkschmierung mit Fett befüllt. Der Dichtungsbalg wird mit seinem zapfenseitigen Randbereich nur teilweise in einem im Querschnitt gesehen L-förmigen Haltering an dem Kugelzapfen festgelegt. Nachteilig bei einer Ausführung nach der DE 36 32 265 C1 ist jedoch, daß der festgesetzte Dichtungsbalg mit seiner äußeren Oberfläche unmittelbar an dem Kraftfahrzeugbauteil anliegt und somit bei Bewegungen des Kugelgelenkes infolge der Relativbewegung zwischen Dichtungsbalg und Kraftfahrzeugbauteil Reibung entsteht, die die Oberfläche des Dichtungsbalges beschädigt und über einen längeren Lebensdauerzyklus hinweg den Balg in seiner Dichtungsfunktion beeinträchtigt beziehungsweise ihn insgesamt zerstört. Dies birgt das Risiko in sich, daß der Dichtungsbalg vorzeitig altert, verschleißt und möglicherweise somit das Gelenk insgesamt ausfällt.

Ein weiteres praktisches Problem bei Kugelgelenken besteht darin, daß der Dichtungsbalg insbesondere beim Montageprozeß des Gelenks auf dem Gelenkzapfen in Richtung des Gelenkgehäuses verrutschen kann und somit durch die Bewegungen des Gelenkzapfens gequetscht und infolgedessen beschädigt wird.

Aus der SUI-PS 465 971 ist um dies zu verhindern ein Haltering bekannt, der festsitzend auf dem Kugelzapfen angeordnet ist und den Dichtungsbalgrand gleitend aufnimmt. Ferner geht aus der Schrift insgesamt ein Kugelgelenk hervor, das aus einem Gehäuse und einem in dem Gehäuse drehbar und kippbar gelagerten Kugelzapfen besteht auf dessen Schaft ein festsitzender Haltering angeordnet ist. Der im Querschnitt gesehen eine L-förmige Gestalt aufweisende Haltering weist somit einen Axialmantel und einen etwa rechtwinklig dazu verlaufenden Radialbund auf. Zur Abdichtung des Gelenkes wird zwischen dem Kugelgelenkgehäuse und dem fest am Kugelzapfen ansitzenden Haltering ein Dichtungsbalg eingesetzt. Zur Erzeugung einer Anpresskraft des Dichtungsbalgrandes an den diesen aufnehmenden Haltering wird ein Spannring verwendet. Dennoch soll gemäß der Offenbarung der genannten Schrift der Dichtungsbalgrandbereich gleitend in dem Haltering aufgenommen sein.

Der Erfindung liegt die technische Problemstellung zugrunde ein Kugelgelenk zu schaffen, daß mit wenig Einzelteilen eine optimale Abdichtfunktion der relativ zueinander beweglichen Kugelgelenkbauteile gegenüber der Umwelt ermöglicht und dabei einfach und kostengünstig herstellbar ist.

Die Erfindung löst diese technische Problemstellung mit den kennzeichnenden Merkmalen des Patentanspruches 1. Weitere Ausgestaltungen der Erfindung sind Gegenstand der Unteransprüche.

Gemäß der vorliegenden Erfindung wird vorgeschlagen, an dem Radialbund des Halteringes einstückig einen Ringbund anzuformen, der in den Randbereich des Dichtungsbalges eingreift. Durch eine erfindungsgemäße Gestaltung eines Halteringes, der festsitzend auf dem Kugelzapfen angeordnet ist, wird es möglich, den Dichtungsbalgrandbereich sowohl am Gehäuse, als auch am Haltering, also zapfenseitig in seiner Lage zu fixieren. Dadurch können zusätzliche Maschinenelemente zur Fixierung des Dichtungsbalgrandbereiches, wie beispielsweise Spannringe, ganz oder teilweise eingespart werden. Das Kugelgelenk kann damit insgesamt einfacher und kostengünstiger produziert werden. Zur Erleichterung des Eingriffes des Ringbundes in den Randbereich des Dichtungsbalges wird gemäß der Erfindung vorgeschlagen, in dem verstärkt ausgeführten Randbereich des Dichtungsbalges eine zu dem Ringbund komplementäre, nutförmige Ausnehmung einzubringen. Der Dichtungsbalgrandbereich überragt damit in radialer Richtung den Haltering.

Um eine zusätzliche Dichtwirkung zu realisieren ist es im Sinne der Erfindung ferner möglich, den radial über den Haltering hinausragenden Teil des Randbreiches des Dichtungsbalges an dem das Kugelgelenk aufnehmenden Kraftfahrzeugbauteil abzustützen.

Da bei einem erfindungsgemäßem Kugelgelenk sowohl der gehäuseseitige Dichtungsbalgansatz als auch der halteringseitige Dichtungsbalgansatz festsitzend ausgeführt ist, werden die Bewegungen der Kugelgelenkbauteile ausschließlich über den Mantelbereich des Dichtungsbalges ausgeglichen. Zur Unterstützung und um einen vorzeitigen Verschleiß dieses Mantelbereiches zu verhindern ist es möglich, den Mantelbereich des Dichtungsbalges mit Versteifungsrippen auszustatten. Diese können während des Herstellungsprozesses eines erfingungsgemäßen Dichtungsbalges angeformt werden.

Zur Montageerleichterung des Halteringes an dem Kugelzapfen wird gemäß einer weiteren Ausgestaltung der Erfindung vorgeschlagen, den Ringbund und/oder den Radialbund durch über ihren Umfang verteilte Schlitze in einzelne Segmente zu unterteilen sodaß beim Aufsetzen des Halteringes auf den Kugelzapfen eine elastische Vorspannung im Haltering erzeugt wird und sich dieser festsitzend am Kugelzapfen anliegt. Das Maß der Vorspannung bemißt sich demnach nach der Elastizität des für den Haltering verwendeten Materials.

Um die Anpresswirkung des verstärkt ausgeführten Randbereiches des Dichtungsbalges am Haltering zu verbessern wird ferner vorgeschlagen, mindestens einen Teil des Radialbundes elastisch verformbar auszuführen. Die elastische Verformbarkeit kann weiterhin dadurch verbessert werden, daß der Radialbund mindestens einen schmalen Abschnitt mit einem verringerten Querschnitt aufweist, der somit ein Scharniergelenk bildet.

In Abhängigkeit von der am Kugelgelenk zu erwartenden Belastung ist es darüber hinaus möglich, in den Haltering, vorzugsweise im Bereich des Radialbundes Verstärkungseinlagen einzuformen. Der beispielsweise aus Kunststoff hergestellte Haltering kann bereits während seines Herstellungsprozesses mit den genannten Einlagen versehen werden. Insgesamt wird dadurch auch die Elastizität des Halteringes verbessert.

Die Montage eines erfindungsgemäßen Kugelgelenkes kann wie folgt durchgeführt werden: Zunächst erfolgt der Zusammenbau des Gehäuses und des Kugelzapfens in an sich bekannter Weise. Dabei kann zwischen Gehäuse und Gelenkkugel eine Lagerschale aus Kunststoff vorgesehen werden. Danach wird der Dichtungsbalg am Gehäuse beispielsweise mittels herkömmlicher Spannmittel, wie eines oder mehrerer Spannringe, angesetzt. Anschließend wird von der Anschlußseite des Kugelzapfens her der Haltering auf den Kugelzapfen geschoben. Dabei wird der Ringbund des Halteringes in die dafür im Randbereich des Dichtungsbalges eingebrachte nutförmige Ausnehmung eingeführt. Anschließend wird der Zapfen des Kugelgelenkes in die dafür vorbereitete Aufnahme des Kraftfahrzeugbauteiles eingesetzt und von der Unterseite des Kraftfahrzeugbauteiles her durch eine Schraubverbindung arretiert. Während des Festschraubens des Kugelzapfens zieht sich dieser verstärkt in das Kraftfahrzeugbauteil hinein. Der mit seinem Radialbund an der Oberfläche des Kraftfahrzeugbauteiles anliegende Haltering wird dabei verformt und der Ringbund des Halteringes rückt verstärkt in die nutförmige Ausnehmung im Dichtungsbalgrandbereich ein, wodurch eine zentripetale Anpresskraft des Dichtungsbalgrandbereiches gegen den Haltering erreicht wird. Das Gelenk ist nunmehr vollständig montiert.

Zur Verbesserung der Dichtwirkung kann gemäß einer weiteren Ausgestaltung der Erfindung ferner am radial äußeren Bereich des Dichtungsbalgrandbereiches eine Dichtlippe angeformt sein. Diese Dichtlippe erzeugt eine Abstreifwirkung.

Um eine axiale Verschiebung des Halteringes und damit des daran anliegenden Dichtungsbalgrandbereiches in Richtung Gelenkkugel des Kugelzapfens zu verhindern, wird gemäß einer weiteren Ausgestaltung der Erfindung ferner vorgeschlagen, eine Abstandshülse einteilig an dem Haltering anzuformen. Die Abstandshülse stützt sich demnach mit ihrer dem Haltering abgewandten Seite an der Unterseite der Gelenkkugel ab.

Der Haltering geht somit oberhalb seines Axialmantels in die Abstandshülse über. Der Übergangsbereich zwischen Axialmantel und Abstandshülse kann jedoch auch ein im Querschnitt gesehen keilförmiger Abschnitt sein, der eine Gleitfläche bildet. Dadurch wird eine weitere, sehr einfache Montagemöglichkeit eines erfindungsgemäßen Kugelgelenkes ermöglicht. Der zapfenseitige Dichtungsbalgrandbereich gleitet während des Montagevorganges über die Gleitfläche des vom Anschlußbereich auf den Kugelzapfen aufgeschobenen Halteringes und rückt zunächst lose in die dafür vorgesehene Aufnahme des Halteringes ein. Während des Festziehens des Kugelzapfens in der zuvor beschriebenen Weise wird der Radialbund des Halteringes elastisch verformt und damit der Dichtungsbalgrandbereich verstärkt in zentripetaler Richtung gegen den Haltering gepreßt. Durch die im Querschnitt keilförmige Gleitfläche oberhalb des Axialmantels liegt der Dichtungsbalgrandbereich in einer annähernd U-förmigen Ringnut des Halteringes und ist somit optimal in seiner Lage fixiert.

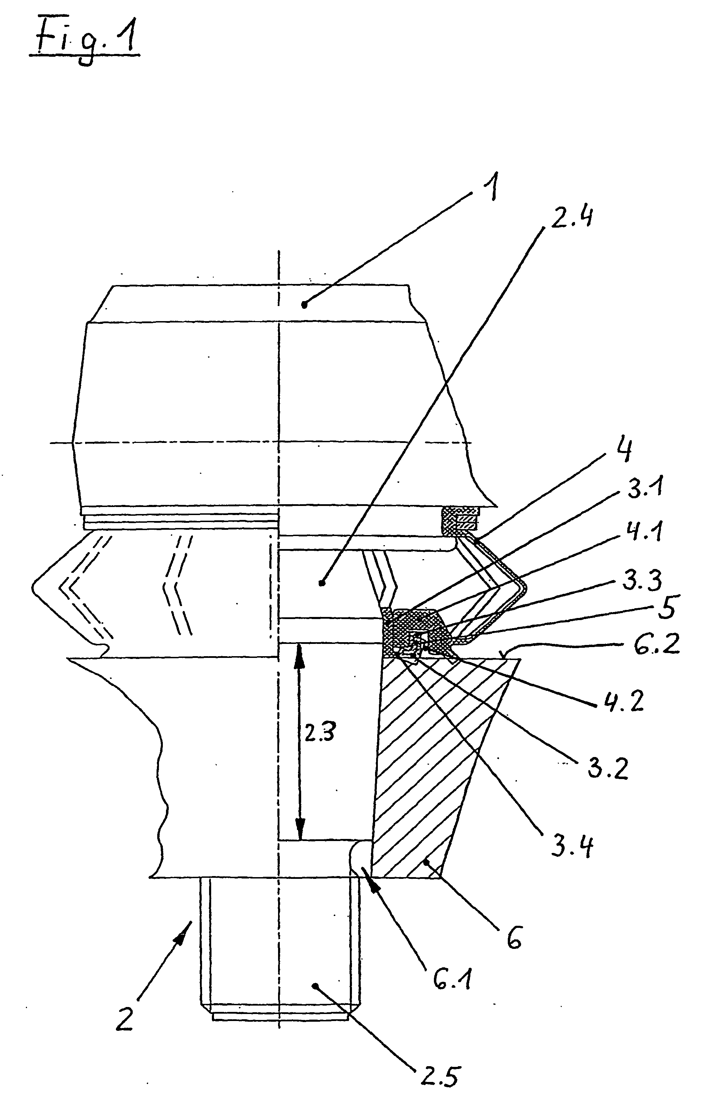

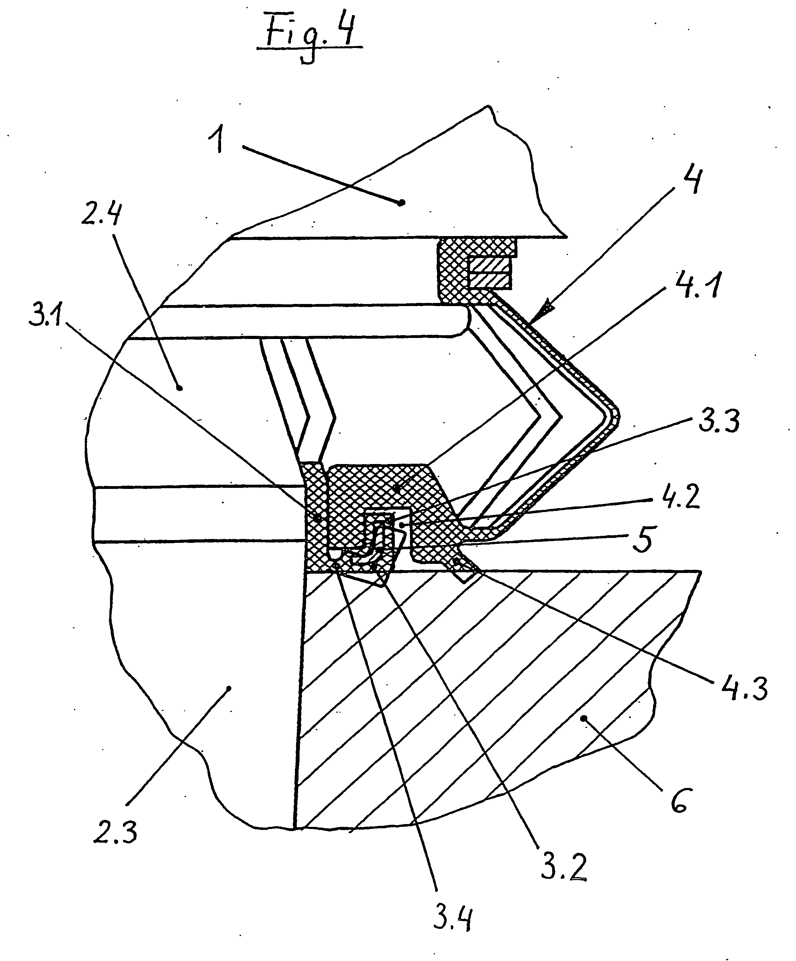

Bevorzugte Ausführungformen eines erfindungsgemäßen Kugelgelenkes werden nachfolgend unter Bezugnahme auf die zugehörigen Zeichnungen näher erläutert. Die Figuren 1 bis 3 zeigen dabei jeweils erfindungsgemäße Kugelgelenke im Teilschnitt mit unterschiedlich gestalteten Halteringen, während in der Figur 4 ausschnittsweise eine vergrößerte Ansicht des Dichtungsbalgrandbereiches dargestellt ist, dessen Ausführung dem in Figur 1 gezeichneten Kugelgelenk entspricht.

Die in den Figuren gezeigten Kugelgelenke weisen jeweils ein Gehäuse 1 auf, in dem ein Kugelzapfen 2 drehbar und kippbar gelagert ist. Die Lagerung kann in an sich bekannter Weise über eine Lagerschale aus Kunststoff oder in anderer Weise erfolgen. Der Kugelzapfen besteht seinerseits aus einer in dem Gehäuse gelagerten Gelenkkugel 2.2, die zur Vereinfachung in den Figuren nicht dargestellt ist und einem sich an die Gelenkkugel anschließenden Schaft 2.1. Der insgesamt als Schaft 2.1 bezeichnete Teil des Kugelzapfens 2 weist seinerseits unterhalb der Gelenkkugel 2.2 einen konischen Anschnitt 2.3 auf Zwischen der Gelenkkugel 2.2 und dem konischen Abschnitt 2.3 des Kugelzapfens 2 ist ein Übergangsbereich 2.4 vorhanden. An den konischen Abschnitt 2.3 schließt sich ein Anschlußbereich 2.5 an.

Ein Dichtungsbalg 4 ist einerseits an dem Gehäuse 1 festgelegt und andererseits in einen Haltering 3 eingesetzt. Der Haltering verfügt über einen an dem Schaft 2.1 anliegenden Axialmantel 3.1 und einen etwa rechtwinklig dazu verlaufenden Radialbund 3.2. Der Radialbund 3.2 ist bei der Ausführung entsprechend der Darstellung in Figur 1 oder in Figur 4 zumindest bereichsweise in seinem Querschnitt reduziert, so daß er ein Scharniergelenk 3.4 bildet. In dem Radialbund sowie an dem sich an den Radialbund anschließenden Ringbund 3.3 des Halteringes 3 ist eine Verstärkungseinlage 5 eingeformt. Der Ringbund 3.3 greift in eine komplementär gestaltete Ausnehmung 4.2 des Randbereiches 4.1 des Dichtungsbalges 4 ein.

Der Kugelzapfen ist mit seinem konischen Abschnitt 2.3 in eine dafür vorgesehene Aufnahmeöffnung 6.1 eines Kraftfahrzeugbauteiles 6 eingesetzt. Dieser Abschnitt durchdringt das Kraftfahrzeugbauteil vollständig, so daß unterhalb des genannten Kraftfahrzeugbauteiles 6 der Anschlußbereich 2.5 hervortritt, der mittels einer Schraubverbindung die Festlegung des Kugelgelenkes an dem Kraftfahrzeugbauteil ermöglicht.

In den Figuren 1 und 4 ist weiterhin schemenhaft der Vormontagezustand des Halteringes 3 eingezeichnet. Dieser wurde durch den nicht schraffierten Radialbund 3.2 und Ringbund 3.3 beziehungsweise die nicht schraffierte Dichtlippe 4.3 angedeutet. Während des Festziehens des Kugelzapfens mittels der Verschraubung führen das Kraftfahrzeugbauteil 6 und der Kugelzapfen 2 eine Relativbewegung aus, wobei der Kugelzapfen 2 in die Aufnahmeöffnung 6.1 des Kraftfahrzeugbauteiles 6 eingezogen wird. Dabei werden der Radialbund 3.2 und der Ringbund 3.3 des Halteringes 3 derart verformt, daß sie den am Haltering anliegenden Bereich des Randbereiches 4.1 des Dichtungsbalges 4 gegen den Axialmantel 3.1 des Halteringes 3 pressen. Dadurch wird eine statische, sehr wirksame Dichtverbindung geschaffen.

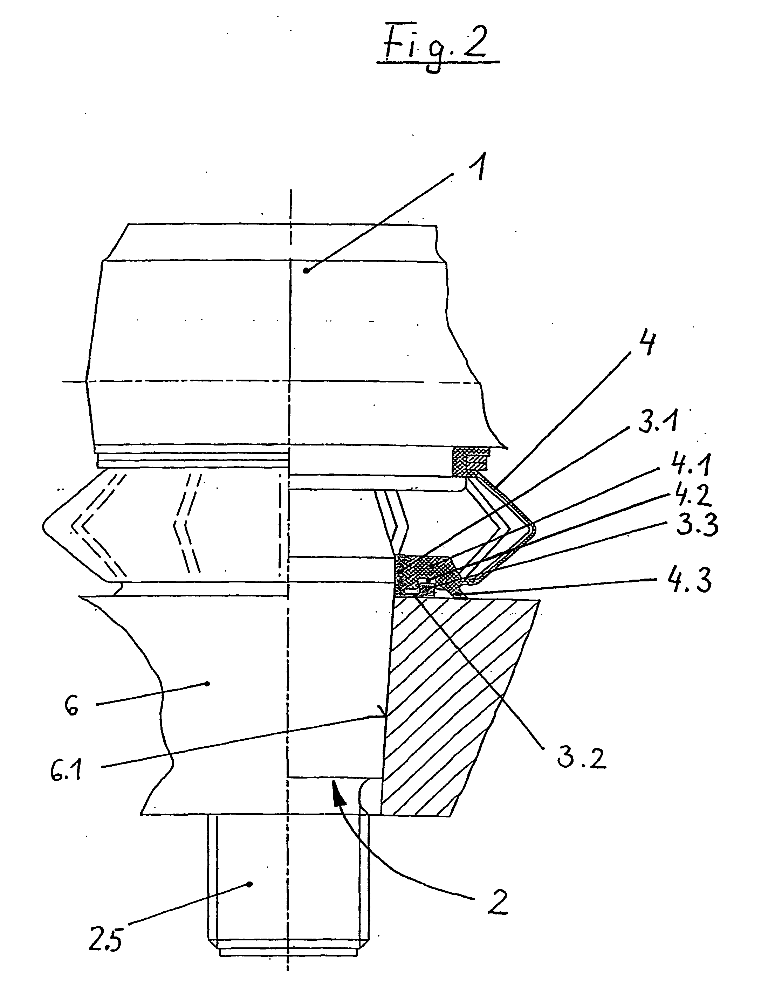

Bei der Ausführung entsprechend der Darstellung in Figur 2 wird der Axialmantel 3.1 des Halteringes 3 zusätzlich mit einer sägezahnartigen Kontur ausgestattet. Diese wirkt mit einer komplementär gestalteten Kontur des Randbereiches 4.1 des Dichtungsbalges zusammen. Die somit geschaffene größere Oberfläche verbessert die Dichtwirkung des Gesamtsystems erheblich gegenüber der zuvor beschriebenen Lösung. Auch bei einer Ausführung entsprechend der Darstellung in Figur 2 greift der Ringbund 3.3 in eine komplementäre Aufnahme 4.2 des Dichungsbalgrandbereiches 4.1 ein. In dem Haltering 3 der Figur 2 sind jedoch keine Verstärkungseinlagen 5 vorgesehen. Die Dichtwirkung und Halterung des Dichtungsbalgrandbereiches wird hier ausschließlich durch die Materialelastizität des Halteringes 3 erreicht.

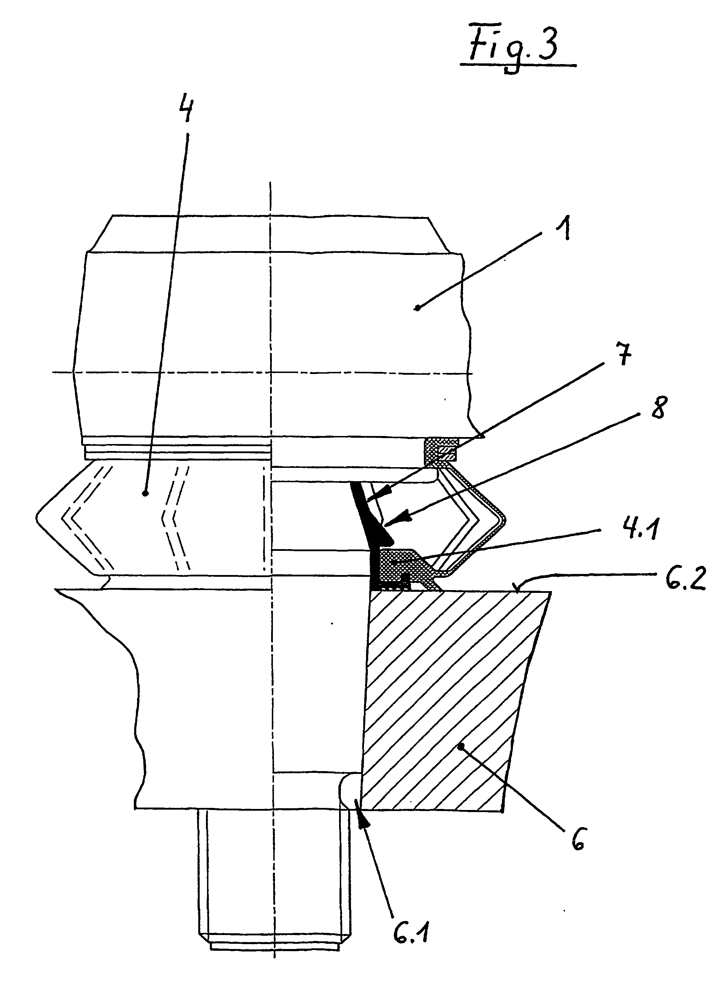

Eine besondere Ausführung eines erfindungsgemäßen Kugelgelenkes geht aus der Darstellung der Figur 3 hervor. Hierin weist der Haltering 3 eine Gleitfläche 8 auf. Diese im Querschnitt keilförmig gestaltete Gleitfläche 8 ermöglicht eine vereinfachte Montage des Dichtungsbalgrandbereiches 4.1. So wird das Kugelgelenk in der eingangs bereits beschriebenen Weise mit dem Dichtungbalg verbunden und erst anschließend wird von der Unterseite, also vom Anschlußbereich 2.5 des Kugelzapfens 2 her der Haltering 3 auf den Kugelzapfen aufgeschoben. Dabei greift der Haltering 3 in die Aufnahmeöffnung des Dichtungbalges 4 und der Dichtungsbalgrandbereich 4.1 gleitet über die Gleitfläche 8 hinweg und wird während der Arretierung des Kugelzapfens 2 an dem Kraftfahrzeugbauteil 6 infolge seiner Eigenelastizität in den Halteringaufnahmebereich eingedrückt. Gleichzeitig schnappt der Ringbund 3.3 in die dafür im Dichtungsbalgrandbereich 4.1 eingeformte Ausnehmung 4.2 ein. Oberhalb der keilförmigen Gleitfläche 8 ist an dem Haltering 3 ferner eine Abstandshülse 7 einstückig angeformt, welche sich mit ihrer Oberseite an der Unterseite der Gelenkkugel abstützt und somit eine Axialverschiebung des Dichtungsbalges bzw. des Halteringes verhindert.

### Bezugszeichenliste:

- 1: Gehäuse
- 2: Kugelzapfen
- 2.1: Schaft
- 2.2: Gelenkkugel
- 2.3: konischer Abschnitt
- 2.4: Übergangsbereich
- 2.5: Anschlußbereich
- 3: Haltering
- 3.1: Axialmantel
- 3.2: Radialbund
- 3.3: Ringbund
- 3.4: Scharniergelenk
- 4: Dichtungsbalg
- 4.1: Randbereich
- 4.2: Ausnehmung
- 4.3: Dichtlippe
- 5: Verstärkungseinlage
- 6: Kraftfahrzeugbauteil
- 6.1: Aufnahmeöffnung
- 6.2: Oberfläche
- 7: Abstandshülse
- 8: Gleitfläche

## Patentansprüche

1. Kugelgelenk bestehend aus:
- einem Gehäuse (1), einem in dem Gehäuse drehbar und kippbar gelagerten Kugelzapfen (2), auf dessen Schaft (2.1) ein festsitzender Haltering (3) angeordnet ist, wobei der Haltering (3) einen an dem Schaft (2.1) anliegenden Axialmantel (3.1) und einen etwa rechtwinklig dazu verlaufenden Radialbund (3.2) mit einem einstückig ausgeführten Ringbund (3.3) aufweist, sowie einem Dichtungsbalg (4), der einerseits an dem Gehäuse (1) anliegt und andererseits in den Haltering (3) eingesetzt ist,
**dadurch gekennzeichnet, daß**
in den verstärkt ausgeführten Randbereich (4.1) des Dichtungsbalges (4) eine zu dem Ringbund (3.3) komplementäre, nutförmige Ausnehmung eingebracht ist, in die der Ringbund (3.3) eingreift.

2. Kugelgelenk nach Anspruch 1,
**dadurch gekennzeichnet, daß**
der Dichtungsbalg (4) festsitzend in dem Haltering (3) aufgenommen ist.

3. Kugelgelenk nach einem der vorstehend genannten Ansprüche,
**dadurch gekennzeichnet, daß**
der Ringbund (3.3) und / oder der Radialbund (3.2) durch über den Umfang verteilte Schlitze in einzelne Segmente unterteilt ist.

4. Kugelgelenk nach einem der vorstehend genannten Ansprüche,
**dadurch gekennzeichnet, daß**
mindestens ein Teil des Radialbundes (3.2) elastisch verformbar ist.

5. Kugelgelenk nach Anspruch 4,
**dadurch gekennzeichnet, daß**
der Radialbund (3.2) mindestens einen schmalen Abschnitt verringerten Querschnitts aufweist, der ein Scharniergelenk (3.4) bildet.

6. Kugelgelenk nach einem der vorstehend genannten Ansprüche,
**dadurch gekennzeichnet, daß**
in den Haltering (3) eine Verstärkungseinlage (5) eingeformt ist.

7. Kugelgelenk nach einem der Ansprüche 1 bis 6,
**dadurch gekennzeichnet, daß**
der während des Einbaus des Kugelgelenkes in ein Kraftfahrzeugbauteil (6) unter elastischer Verformung in die Ausnehmung (4.2) einrückende Ringbund (3.3) zumindest einen Teil des Randbereiches (4.1) des Dichtungsbalges (4) gegen den Axialmantel (3.1) des Halteringes (3) drückt.

8. Kugelgelenk nach einem der vorstehend genannten Ansprüche,
**dadurch gekennzeichnet, daß**
an der freien äußeren Oberfläche des Randbereiches (4.1) des Dichtungsbalges (4) eine Dichtlippe (4.3) angeformt ist.

9. Kugelgelenk nach einem der vorstehend genannten Ansprüche,
**dadurch gekennzeichnet, daß**
der Kugelzapfen (2) aus einem Schaft (2.1) und einer daran angeformten Gelenkkugel (2.2) besteht, wobei der Schaft (2.1) einen konischen Abschnitt (2.3) aufweist, der zumindest teilweise in eine Aufnahmeöffnung (6.1) eines Kraftfahrzeugbauteiles (6) eingesetzt ist.

10. Kugelgelenk nach Anspruch 9,
**dadurch gekennzeichnet, daß**
sich der Radialbund (3.2) an einer zugeordneten Oberfläche (6.2) des Kraftfahrzeugbauteiles (6) abstützt.

11. Kugelgelenk nach einem der vorstehend genannten Ansprüche,
**dadurch gekennzeichnet, daß**
der Haltering (3) oberhalb des Axialmantels (3.1) in eine Abstandshülse (7) übergeht.

12. Kugelgelenk nach einem der Ansprüche 1 bis 11,
**dadurch gekennzeichnet, daß**
der Haltering (3) oberhalb des Axialmantels (3.1) in eine Abstandshülse (7) übergeht, wobei der Übergangsbereich zwischen Axialmantel (3.1) und Abstandshülse (7) ein im Querschnitt gesehen keilförmiger Abschnitt ist, der eine Gleitfläche (8) bildet.

13. Kugelgelenk nach einem der Ansprüche 11 oder 12,
**dadurch gekennzeichnet, daß**
die Abstandshülse (7) zumindest bereichsweise geschlitzt ist.

## Claims

1. Ball joint comprising:
- a housing (1), a ball pivot (2), which is supported in a rotatable and tiltable manner in the housing and on the shank (2.1) of which a tight-fitting retaining ring (3) is disposed, wherein the retaining ring (3) comprises an axial envelope (3.1) lying adjacent to the shank (2.1) as well as a radial collar (3.2) extending approximately at right angles thereto and having an integrally formed annular collar (3.3), as well as sealing bellows (4), which lie with one end adjacent to the housing (1) and are inserted by the other end into the retaining ring (3),
**characterized in that**
introduced into the strengthened edge region (4.1) of the sealing bellows (4) is a groove-shaped recess, which is complementary to the annular collar (3.3) and into which the annular collar (3.3) engages.

2. Ball joint according to claim 1,
**characterized in that**
the sealing bellows (4) are received in a tight-fitting manner in the retaining ring (3).

3. Ball joint according to one of the previously described claims,
**characterized in that**
the annular collar (3.3) and/or the radial collar (3.2) is subdivided by slots distributed over the circumference into individual segments.

4. Ball joint according to one of the previously described claims,
**characterized in that**
at least a part of the radial collar (3.2) is elastically deformable.

5. Ball joint according to claim 4,
**characterized in that**
the radial collar (3.2) has at least one narrow portion of reduced cross section that forms a hinged joint (3.4).

6. Ball joint according to one of the previously described claims,
**characterized in that**
a strengthening insert (5) is incorporated into the retaining ring (3).

7. Ball joint according to one of claims 1 to 6,
**characterized in that**
the annular collar (3.3), which during fitting of the ball joint into a motor vehicle component (6) moves with simultaneous elastic deformation into the recess (4.2), presses at least a part of the edge region (4.1) of the sealing bellows (4) towards the axial envelope (3.1) of the retaining ring (3).

8. Ball joint according to one of the previously described claims,
**characterized in that**
a sealing lip (4.3) is formed on the free outer surface of the edge region (4.1) of the sealing bellows (4).

9. Ball joint according to one of the previously described claims,
**characterized in that**
the ball pivot (2) comprises a shank (2.1) and a joint ball (2.2) formed thereon, wherein the shank (2.1) has a conical portion (2.3) that is inserted at least partially into a receiving opening (6.1) of a motor vehicle component (6).

10. Ball joint according to claim 9,
**characterized in that**
the radial collar (3.2) is supported against an associated surface (6.2) of the motor vehicle component (6).

11. Ball joint according to one of the previously described claims,
**characterized in that**
the retaining ring (3) verges above the axial envelope (3.1) into a spacer tube (7).

12. Ball joint according to one of claims 1 to 11,
**characterized in that**
the retaining ring (3) verges above the axial envelope (3.1) into a spacer tube (7), wherein the transitional region between axial envelope (3.1) and spacer tube (7) is a - viewed in cross section - wedge-shaped portion that forms a sliding surface (8).

13. Ball joint according to one of claims 11 or 12,
**characterized in that**
the spacer tube (7) is slotted at least in sections.

## Revendications

1. Articulation à rotule formée par un boîtier (1), un tourillon d'articulation (2), qui est monté rotatif et basculant dans le boîtier (1) et sur la tige (2.1) duquel est agencée une bague de retenue (3) fixe, la bague de retenue (3) comportant une paroi axiale (3.1) en appui contre la tige (2.1) et une bride radiale (3.2) à peu près perpendiculaire à ladite paroi axiale et munie d'une bride annulaire (3.3) réalisée d'un seul tenant, ainsi que par un soufflet d'étanchéité (4), qui est en appui, sur un côté, contre le boîtier (1) et qui est inséré, de l'autre côté, dans la bague de retenue (3),
**caractérisée en ce que**, dans la zone de bordure (4.1) renforcée du soufflet d'étanchéité (4), est ménagé un évidement en forme de rainure, qui est complémentaire à la bride annulaire (3.3) et dans lequel s'engage la bride annulaire (3.3).

2. Articulation à rotule selon la revendication 1, **caractérisée en ce que** le soufflet d'étanchéité (4) est reçu fixe dans la bague de retenue (3).

3. Articulation à rotule selon l'une quelconque des revendications précédentes, **caractérisée en ce que** la bride annulaire (3.3) et/ou la bride radiale (3.2) est divisée en différents segments par des fentes réparties sur le pourtour.

4. Articulation à rotule selon l'une quelconque des revendications précédentes, **caractérisée en ce qu'**au moins une partie de la bride radiale (3.2) est élastiquement déformable.

5. Articulation à rotule selon la revendication 4, **caractérisée en ce que** la bride radiale (3.2) comporte au moins une étroite zone avec une section transversale réduite, qui forme ainsi une articulation de type charnière (3.4).

6. Articulation à rotule selon l'une quelconque des revendications précédentes, **caractérisée en ce qu'**un insert de renforcement (5) est formé dans la bague de retenue (3).

7. Articulation à rotule selon l'une quelconque des revendications 1 à 6, **caractérisée en ce que** la bride annulaire (3.3), qui, sous l'effet de la déformation élastique, s'enfonce dans l'évidement (4.2) au moment du montage de l'articulation à rotule dans une pièce du véhicule (6), pousse au moins une partie de la zone de bordure (4.1) du soufflet d'étanchéité (4) contre la paroi axiale (3.1) de la bague de retenue (3).

8. Articulation à rotule selon l'une quelconque des revendications précédentes, **caractérisée en ce qu'**une lèvre d'étanchéité (4.3) est formée contre la surface extérieure libre de la zone de bordure (4.1) du soufflet d'étanchéité (4).

9. Articulation à rotule selon l'une quelconque des revendications précédentes, **caractérisée en ce que** le tourillon d'articulation (2) est formé par une tige (2.1) et une rotule d'articulation (2.2), formée contre celle-ci, la tige (2.1) comportant un tronçon conique (2.3) qui est inséré au moins en partie dans un orifice de réception (6.1) d'une pièce du véhicule (6).

10. Articulation à rotule selon la revendication 9, **caractérisée en ce que** la bride radiale (3.2) est en appui contre une surface (6.2) associée de la pièce du véhicule (6).

11. Articulation à rotule selon l'une quelconque des revendications précédentes, **caractérisée en ce que** la bague de retenue (3) se prolonge au-dessus de la paroi axiale (3.1) par une douille d'écartement (7).

12. Articulation à rotule selon l'une quelconque des revendications 1 à 11, **caractérisée en ce que** la bague de retenue (3) se prolonge au-dessus de la paroi axiale (3.1) par une douille d'écartement (7), la zone de transition entre la paroi axiale (3.1) et la douille d'écartement (7) étant une zone avec une section transversale en forme de clavette, qui forme une face de glissement (8).

13. Articulation à rotule selon la revendication 11 ou 12, **caractérisée en ce que** la douille d'écartement (7) est fendue au moins par zones.
